# FASCICULE DE BREVET EUROPEEN

(11) **EP 3 022 037 B1**
(45) Date de publication et mention de la délivrance du brevet: **11.12.2019**
(21) Numéro de dépôt: 14750576.2
(22) Date de dépôt: 17.07.2014
(51) Int. Cl.: B29C 45/16, B29C 45/14, B29C 65/70

(54) **PROCÉDÉ D'ASSEMBLAGE DE PIÈCES DE TURBOMACHINE**
VERFAHREN ZUR MONTAGE VON TURBOMASCHINENTEILEN
METHOD FOR ASSEMBLING TURBOMACHINE PARTS

(30) Priorité: 18.07.2013 FR 1357078
(43) Date de publication de la demande: 25.05.2016
(73) Titulaire: Safran Aircraft Engines, 75015 Paris (FR)
(72) Inventeur: VATIN, Eric, Raymond, Jean, F-77550 Moissy-Cramayel Cedex (FR)
(74) Mandataire: Brevalex
(86) Numéro de dépôt international: PCT/FR2014/051832
(87) Numéro de publication internationale: WO 2015/007994

(56) Documents cités:
- EP-A1- 2 586 989
- FR-A1- 2 958 323
- FR-A1- 2 958 323

## Description

### DOMAINE TECHNIQUE

L'invention se rapporte au domaine de l'assemblage de pièces de turbomachine.

La fabrication d'une turbomachine fait nécessairement appel à de nombreuses étapes d'assemblage dont certaines sont particulièrement chronophage et énergivore.

Ainsi l'invention concerne un procédé d'assemblage de pièces de turbomachine et un ensemble mis en oeuvre lors de cet assemblage.

### ÉTAT DE LA TECHNIQUE ANTÉRIEURE

Il est connu, pour assembler deux pièces de turbomachine, d'utiliser des élastomères vulcanisables, tels qu'un silicone vulcanisable à température ambiante.

Un tel assemblage est généralement obtenu par la mise en oeuvre d'un procédé d'assemblage de pièces de turbomachine comprenant les étapes consistant à :
- assembler la première et la deuxième pièce sur un support,
- injecter un élastomère vulcanisable, tel qu'un silicone vulcanisable à température ambiante, au niveau d'une zone d'injection à la jonction de la première et de la deuxième pièce,
- disposer le support et les première et deuxième pièces dans une étuve à 100°C pendant une durée généralement d'environ 1h,
- refroidir le support et les première et deuxième pièces,
- démonter l'assemblage de la première et de la deuxième pièce.

Si un tel procédé permet d'obtenir une vulcanisation de l'élastomère relativement rapide par rapport à une vulcanisation à température ambiante, il présente un certain nombre d'inconvénients.

L'utilisation d'une étuve pour chauffer le support et les deux pièces est particulièrement énergivore lorsque les pièces à assembler sont des pièces de grandes dimensions et particulièrement massiques. De plus, pour ce même type de pièces massiques, le temps nécessaire pour le refroidissement peut dépasser 2h, voire 4h. On peut enfin noter que l'opérateur doit placer l'ensemble support/ pièces à assembler dans l'étuve puis les retirer. Ces opérations peuvent être particulièrement laborieuses pour l'opérateur lorsque les pièces sont massiques et de grandes dimensions.

Il est également connu de l'art antérieur de réaliser l'étape de chauffage au moyen non pas d'une étuve mais d'une enceinte chaude. Une telle enceinte chaude est formée au moyen d'un couvercle du support ou d'une couverture disposée sur le support. Le couvercle ou la couverture comporte un système de chauffage pour chauffer l'ensemble support\ pièces à assembler de manière à vulcaniser l'élastomère. Le document de brevet EP2586989 divulgue des viroles de stator de turbomachine axiale. lus particulièrement le document a trait au domaine des viroles segmentées en matériau composite comprenant notamment un polymère. Le document de brevet FR2958323 divulgue une etage redresseur pour une turbomachine, comportant deux viroles coaxiales, respectivement interne et externe , entre lesquelles s'étendent des pales sensiblement radiales dont les extrémités radialement externes sont soudées à la virole externe et dont les extrémités radialement internes traversent des orifices d'un anneau extérieur de la virole interne, et sont maintenues par des cales en élastomère dans une cavité annulaire.

Néanmoins, si un tel système d'enceinte chaude limite les problèmes de manipulation de l'ensemble support\ pièces à assembler, les problèmes liés à l'énergie utilisée pour obtenir cette vulcanisation et des temps de chauffage et de refroidissement restent entiers.

On peut noter que les problématiques exposées ci-dessus sont particulièrement présentes dans le cas d'un assemblage d'un redresseur à partir d'une virole intérieure et d'une virole extérieure sur laquelle des aubes ont préalablement été fixées, ceci en raison de la masse et des dimensions des viroles intérieure et extérieure.

### EXPOSÉ DE L'INVENTION

L'invention vise à remédier à ces inconvénients.

Un but de l'invention est de fournir un procédé d'assemblage avec une étape de vulcanisation présentant une consommation énergétique réduite vis-à-vis des procédés d'assemblage de l'art antérieur qui comportent une étape de vulcanisation.

Un autre but de l'invention est de fournir un procédé d'assemblage, avec une étape de vulcanisation, dont la durée de l'étape de refroidissement est réduite vis-à-vis des procédés d'assemblage de l'art antérieur qui comportent une étape de vulcanisation.

L'invention concerne à cet effet un procédé d'assemblage d'une première pièce de turbomachine avec au moins une deuxième pièce de turbomachine, comportant les étapes suivantes:
- injection d'un élastomère vulcanisable, un silicone vulcanisable à température ambiante dit silicone RTV, dans une zone d'injection à la jonction de la première et la deuxième pièce,
- chauffage local de la zone d'injection de manière à vulcaniser l'élastomère vulcanisable.

On entend par une étape de « chauffage local de la zone d'injection de manière à vulcaniser l'élastomère vulcanisable » que l'étape de chauffage est réalisée de manière à fournir un échauffement localisé sur la zone d'injection et ainsi éviter un échauffement excessif de la premier et de la deuxième pièce.

Ainsi, par la mise en œuvre d'un tel procédé d'assemblage il suffit de fournir l'énergie nécessaire pour chauffer uniquement la zone d'injection, sans échauffement excessif de la première et de la deuxième pièce. Il en résulte une consommation d'énergie drastiquement réduite vis-à-vis des procédés de l'art antérieur en conjonction avec également un temps de chauffe et de refroidissement également réduit.

La première et la deuxième pièce peuvent être deux pièces annulaires destinées à former après assemblage un redresseur de turbomachine.

La première pièce peut être une virole intérieure du redresseur, la deuxième pièce étant formée d'une virole extérieure sur laquelle ont été préalablement assemblées des aubes.

La première pièce peut être une virole intérieure du redresseur, les deuxièmes pièces étant des aubes.

De tels procédés sont particulièrement avantageux pour de telles pièces, ceci en raison de la masse particulièrement importante des pièces constituant un redresseur. Les bénéfices énergétiques et en temps d'assemblage sont donc particulièrement avantageux.

L'étape de chauffage local peut être mise en oeuvre au moyen d'un ensemble comportant un support pour la première et la deuxième pièce et un système de chauffage local comprenant une zone de chauffage et qui est associé au support de manière à ce que la zone de chauffage se retrouve en regard de la zone d'injection pendant la mise en oeuvre de l'étape de chauffage.

Un tel ensemble permet de fournir un chauffage local particulièrement efficace puisque la zone de chauffage est directement en regard de la zone d'injection.

L'ensemble peut faire également office de support d'assemblage mis en oeuvre lors de l'étape d'injection de l'élastomère.

Ainsi il n'est pas nécessaire de manipuler l'assemblage formé par la première et la deuxième pièce après l'injection. Il en résulte un gain de temps et la suppression d'une étape particulièrement épuisante pour l'opérateur.

L'étape de chauffage local peut être mise en oeuvre au moyen d'un élément chauffant préalablement disposé sur les deux pièces de turbomachine à proximité de la zone d'injection.

Un tel élément chauffant permet de réaliser l'étape de chauffage local directement sur un support d'assemblage classique mis en oeuvre lors de l'étape d'injection sans qu'il soit donc nécessaire de démonter l'assemblage formé par la première et la deuxième pièce.

Lors de l'étape de chauffage local, l'élément chauffant peut être en contact avec l'une parmi la première et la deuxième pièce de turbomachine, ladite pièce parmi la première et la deuxième pièce présentant une surface en regard de la zone d'injection.

L'étape de chauffage local peut être mise en oeuvre par un système de chauffage extérieur au support tel qu'un système de soufflage d'air chaud au niveau de la zone d'injection, un rayonnement laser ou un rayonnement micro-onde.

De tels systèmes de chauffage extérieurs permettent de réaliser l'étape de chauffage local avec les pièces qui restent positionnées sur un support d'assemblage classique mis en oeuvre lors de l'étape d'injection, sans qu'il soit donc nécessaire de démonter l'assemblage formé par la première et la deuxième pièce.

L'invention concerne également un ensemble pour l'assemblage d'une première pièce de turbomachine avec au moins une deuxième pièce de turbomachine par injection et vulcanisation d'un élastomère vulcanisable dans une zone d'injection à la jonction de la première et la deuxième pièce, ledit ensemble comportant un support et un système de chauffage local, le système de chauffage local comportant une zone de chauffage, lesdits support et système de chauffage étant associés de manière à ce que la zone de chauffage se retrouve après assemblage de la première et de la deuxième pièce en regard de la zone d'injection.

Un tel ensemble permet de fournir un moyen d'assemblage de la première pièce sur la deuxième pièce qui puisse être utilisé aussi bien pendant l'étape d'injection de l'élastomère vulcanisable que pendant l'étape de chauffage local.

Le système de chauffage local peut comprendre, pour fournir la surface de chauffage, un moyen de chauffage sélectionné parmi le groupe comportant : un circuit de fluide caloporteur, une résistance chauffante, un système à effet Peltier et un inducteur.

De tels moyens de chauffage fournissent un chauffage local avec un volume occupé relativement réduit et peuvent donc être facilement intégré dans un ensemble selon l'invention.

Le système de chauffage peut être intégré au support, en formant, par exemple, une paroi annulaire de centrage dimensionnée et agencée pour centrer l'assemblage formé par la première et la deuxième pièce.

Le support peut comporter une embase à partir de laquelle s'étend une paroi annulaire de support du système de chauffage local, le système de chauffage local étant monté le long de la paroi annulaire et étant dimensionné et agencé pour centrer l'assemblage avec la zone de chauffage en regard de la zone d'injection.

Le support peut intégrer le système de chauffage dans une paroi de centrage de l'assemblage.

L'ensemble d'assemblage peut former un support pour l'assemblage d'un redresseur de turbomachine.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 illustre un ensemble mis en oeuvre lors d'un procédé d'assemblage selon un premier mode de réalisation de l'invention dans lequel le chauffage est fourni par un liquide caloporteur, deux pièces à assembler étant disposées sur l'ensemble,
- la figure 2 illustre un ensemble mis en œuvre lors d'un procédé d'assemblage selon un deuxième mode de réalisation de l'invention dans lequel le chauffage est fourni par une résistance chauffante, deux pièces à assembler étant disposées sur l'ensemble,
- la figure 3 illustre une étape de chauffage local d'un procédé d'assemblage selon un troisième mode de réalisation dans lequel il est mis en oeuvre un cordon chauffant,
- la figure 4 illustre une étape de chauffage local d'un procédé d'assemblage selon un quatrième mode de réalisation dans lequel il est mis en oeuvre un soufflage d'air chaud stationnaire,
- la figure 5 illustre une étape de chauffage local d'un procédé d'assemblage selon un cinquième mode de réalisation dans laquelle il est mis en oeuvre un soufflage d'air chaud tournant.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

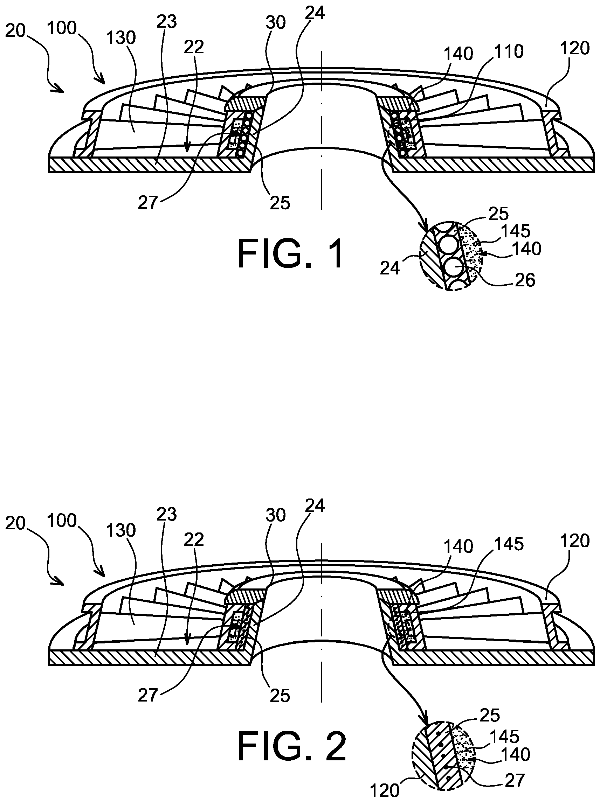

La figure 1 illustre un ensemble 20 pour l'assemblage d'un redresseur 100 de turbomachine à partir d'une virole intérieure 110 et d'une virole extérieure 120 sur laquelle ont été préalablement montées des aubes 130.

Un tel ensemble 20 est mis en oeuvre lors de l'assemblage d'un redresseur 100 comprenant les étapes de :
- montage de la virole extérieure 120 sur la virole intérieure 110 avec les extrémités des aubes 130 qui sont opposées à la virole extérieure 120 logées dans des orifices correspondants de la virole intérieure 110,
- mise en place de l'ensemble virole intérieure 110/ virole extérieure 120 sur l'ensemble 20,
- mise en place sur l'ensemble 20 d'un couvercle d'injection 30 pour fermer une zone d'injection 140 à la jonction de la virole intérieure 110 et des aubes 130 montées sur la virole extérieure 120,
- injection d'un silicone 145 vulcanisable à température ambiante, plus connue sous la dénomination silicone RTV,
- chauffage local de la zone d'injection 140 de manière à vulcaniser le silicone 145 et à obtenir un scellement des aubes 130 sur la virole intérieure 110 et une étanchéité de la jonction entre les aubes 130 et la virole intérieure 110.

Un tel procédé d'assemblage d'un redresseur 100, mise à part l'étape de chauffage local, est connu du brevet français FR 2958323. Pour cette raison, les spécificités des autres étapes que celles de l'étape de chauffage local ne seront pas décrites plus précisément dans ce document.

Un tel procédé d'assemblage permet un scellement des aubes 130 dans la virole intérieure 110 tout en fournissant une fonction de joint d'étanchéité abradable pour l'ensemble rotor/stator de la turbomachine.

L'ensemble 20 comporte un support 22 d'assemblage et une couronne 25 de centrage et de chauffage.

Le support 22 comporte une embase 23 et une paroi annulaire 24 de support pour la couronne 25. L'embase 23 présente une forme générale de disque dont le diamètre est supérieur ou égal à celui de la virole extérieure 120. La paroi annulaire 24 présente une forme d'enveloppe cylindrique qui s'étend à partir de l'embase 23 transversalement à l'embase 23 avec un diamètre extérieur inférieur à celui de la virole intérieure 110.

La couronne 25 est adaptée pour être montée radialement à l'extérieur de la paroi annulaire 24 et comporte, à cet effet un profil intérieur complémentaire au profil extérieur de la paroi annulaire 24. Ainsi le diamètre intérieur de la couronne 25 est légèrement supérieur au diamètre extérieur de la paroi annulaire 24. Le profil extérieur de la couronne 25 opposé à la paroi annulaire 24 est adapté en fonction des contraintes d'injection afin d'imprimer la forme voulue au silicone 145 lors de son injection. Ce même profil extérieur de la couronne 25 fournit également une fonction de guidage de la virole intérieure 110 de manière à la centrer lors de son placement sur l'ensemble 20. De cette manière la couronne permet de centrer l'assemblage virole intérieure 110 par rapport à la virole extérieure 120 lors de sa mise en place sur l'ensemble 20.

On peut noter que selon une possibilité de l'invention, un même support 22 peut être associé à plusieurs couronnes 25, chacune des couronnes 25 présentant un profil extérieur correspondant à un type de redresseur 100. Une telle possibilité permet d'utiliser un seul support 22 pour l'assemblage de plusieurs types de redresseurs 100.

La couronne 25 comporte un dispositif de chauffage 26 formé par un circuit de liquide caloporteur. Le dispositif de chauffage 26 est intégré dans la couronne 25 de manière à ce qu'il délimite, lorsque l'ensemble 20 supporte l'assemblage virole intérieure 110/ virole extérieure 120, une zone de chauffage 27 en regard de la zone d'injection 140.

Le dispositif de chauffage 26 forme un moyen de chauffage tandis que la couronne 25 forme un système de chauffage local.

La couronne 25 peut également comporter, selon une possibilité de l'invention non illustrée, un système de mesure de température tel qu'un thermocouple. Un tel système de mesure de température est particulièrement avantageux pour contrôler le bon déroulement de l'application de la chaleur par le dispositif de chauffage 26 à la zone d'injection 140 et donc d'assurer la vulcanisation du silicone 145.

Selon une possibilité avantageuse, non illustrée, la couronne 25 peut être formée dans deux matériaux différents, l'un isolant thermique, qui forme notamment la surface intérieure de la couronne qui est en contact avec le support 22, l'autre conducteur thermique de manière à ce que la couronne 25 présente une zone de chauffage 27 de température relativement homogène.

Le couvercle d'injection 30 vient se positionner sur l'ensemble 20 après le montage de la virole intérieure 110 et de la virole extérieure 120. De cette manière le couvercle d'injection 30 ferme la zone d'injection 140. La zone d'injection 140 est alors délimitée par la surface extérieure de la couronne 25, la virole intérieure 110 et le couvercle d'injection 30. La zone d'injection 140 et la forme du joint formé lors de cette même injection, sont parfaitement définies.

Lors de l'étape de chauffage local, avec un tel ensemble 20 selon ce premier mode de réalisation, du liquide caloporteur monté à température est mis en circulation dans le circuit de liquide caloporteur de manière à amener à température la surface de chauffage 27 et à vulcaniser le silicone 145 injecté. Ainsi, dans le cas particulier du silicone RTV, le liquide caloporteur peut avoir, par exemple, une température de 60°C et il peut être mis en circulation dans le circuit de liquide caloporteur pendant une durée sensiblement égale à 30 minutes lors de l'étape de chauffage local.

De plus, avec un tel dispositif de chauffage 26, il est également possible d'utiliser le circuit de liquide caloporteur pour fournir un refroidissement actif de la zone d'injection 140. En effet, après circulation d'un liquide caloporteur amené à une température lors de l'étape de chauffage local, il est possible de faire circuler un liquide présentant une température abaissée vis-à-vis de la température de la zone d'injection 140 de manière à obtenir un tel refroidissement actif.

La figure 2 illustre un ensemble 20 selon un deuxième mode de réalisation de l'invention dans lequel le dispositif de chauffage 26 est un circuit résistif chauffant. Un tel ensemble se différencie d'un ensemble 20 selon le premier mode de réalisation en ce que le circuit de liquide caloporteur est substitué par un circuit résistif chauffant.

Un tel ensemble 20 se différencie également dans la mise en œuvre, ce dernier ensemble 20 n'étant pas adapté pour fournir un refroidissement actif de la zone d'injection 140 après l'étape de chauffage local.

Selon d'autres possibilités non illustrées le dispositif de chauffage 26 peut également être un système à effet Peltier ou un inducteur. Un système Peltier, offre, de manière similaire au circuit de liquide caloporteur, la possibilité de fournir un refroidissement actif. Dans le cas d'un inducteur intégré dans la couronne 25, il est également nécessaire de prévoir un générateur de courant inductif pour générer le courant dans l'inducteur.

Selon une possibilité de ces deux premiers modes de réalisation l'ensemble peut comporter un unique support 22, la paroi annulaire 24 étant adaptée pour fournir la fonction de guidage et de centrage de l'assemblage virole intérieure 110/virole extérieure 120 et comportant le dispositif de chauffage 27 de manière à fournir la zone de chauffage en regard de la zone d'injection.

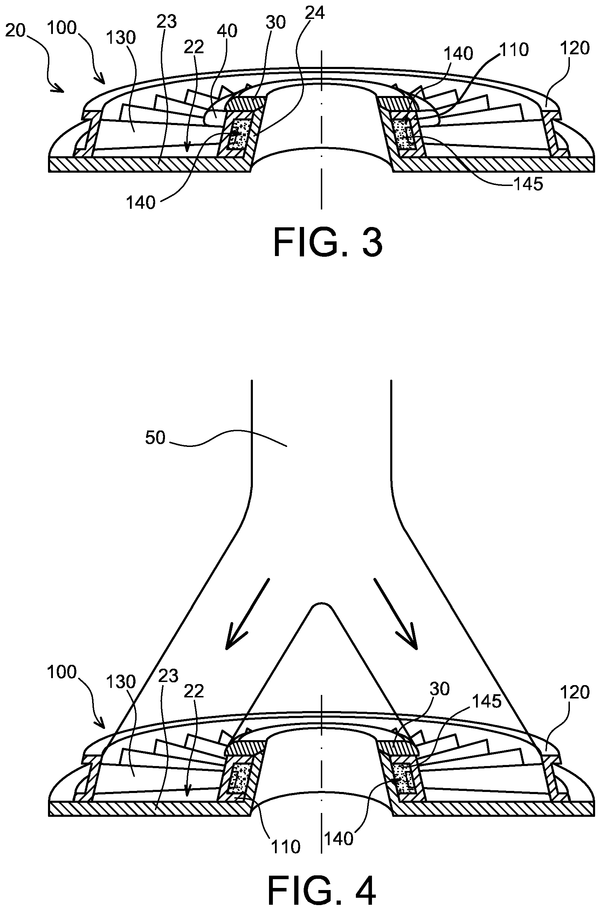

La figure 3 illustre une étape de chauffage local d'un procédé d'assemblage selon un troisième mode de réalisation dans lequel le chauffage local est fourni par un élément chauffant 40 disposé sur les aubes 130 à proximité de la zone d'injection 140. Le placement de l'élément chauffant 40 à proximité de la zone d'injection 140 doit s'entendre à une distance suffisamment faible pour effectuer un chauffage local de la zone d'injection 140. Un procédé d'assemblage selon ce troisième mode de réalisation se différencie d'un procédé selon le premier mode de réalisation en ce qu'il ne met pas en oeuvre une couronne 25 et en ce que l'étape de chauffage met en oeuvre un élément chauffant 40 et non un circuit de liquide caloporteur 26 intégré à une couronne 25.

Dans ce troisième mode, l'ensemble 20 comporte donc uniquement le support d'assemblage 22. La paroi annulaire 24 est configurée pour guider et centrer la virole intérieure 110 ceci de manière à centrer l'assemblage virole intérieure 110/virole extérieure 120 lors de sa mise en place sur l'ensemble 20. De même, le profil de la surface extérieure de la paroi annulaire 24 est adaptée en fonction des contraintes d'injection afin d'imprimer la forme voulu au silicone 145 lors de son injection.

L'élément chauffant 40, dans ce troisième mode de réalisation, est un cordon chauffant dont la température préférentiellement régulée à une température adaptée pour obtenir la vulcanisation du silicone 145. Cette température peut être, par exemple et dans le cas d'un silicone RTV, 60°C.

L'étape de chauffage local selon ce troisième mode de réalisation comporte les sous étapes suivantes :
- mise en place de l'élément chauffant 40 sur les aubes 130 à proximité de la zone d'injection 140,
- mise en œuvre de l'élément chauffant 40 de manière chauffer localement la zone d'injection 140.

Lors de la mise en place de l'élément chauffant 40 sur les aubes 130, ce dernier est mis en contact avec la virole intérieure 110 qui présente une surface en regard de la zone d'injection 140. Ainsi lors de la mise en oeuvre de l'élément chauffant, une partie importante de la chaleur transmise par l'élément chauffant 40 à la virole intérieure 110 est appliquée à la zone d'injection 140 par la surface de la virole intérieure 110 qui est en regard de la zone d'injection 140. Une telle application de chaleur permet d'obtenir un chauffage local de la zone d'injection 140.

La figure 4 illustre une étape de chauffage local d'un procédé d'assemblage selon un quatrième mode de réalisation dans lequel le chauffage local est fourni par un soufflage d'air chaud 50 au niveau de la zone d'injection 140. Un procédé selon ce quatrième mode de réalisation se différencie d'un procédé selon le troisième mode de réalisation en ce qu'il n'est pas mis en oeuvre un élément chauffant 40 disposé sur les aubes 130 et en ce que le chauffage local est fourni par un système de chauffage à distance, non illustré.

La mise en oeuvre d'une telle étape de chauffage local peut être effectuée, par exemple, au moyen d'une hotte soufflante dont le flux d'air chaud 50 est soufflé en direction de la zone d'injection de manière à fournir une vulcanisation du silicone 145. Cette hotte soufflante peut être un système de soufflerie installé à demeure ou être un dispositif de soufflerie que l'opérateur vient placer au dessus du support d'assemblage 22 en regard de la zone d'injection.

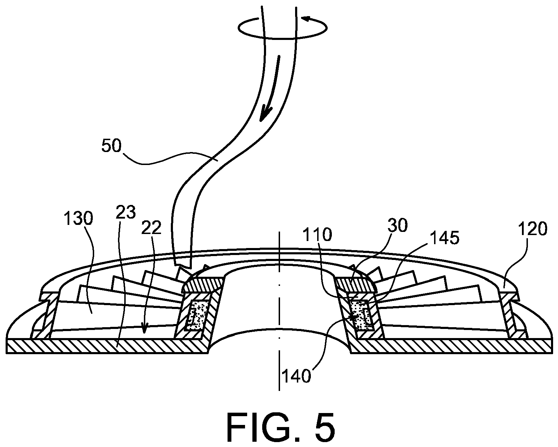

La figure 5 illustre une étape de chauffage local d'un procédé d'assemblage selon un cinquième mode de réalisation de l'invention dans lequel le chauffage local est fourni par un soufflage d'air chaud 50 tournant qui est déplacé le long de la zone d'injection 140. Un procédé selon ce cinquième mode de réalisation se différencie d'un procédé selon le quatrième mode de réalisation en ce que pendant l'étape de chauffage le flux d'air chaud 50 est un flux de d'air concentré qui est dirigé vers la zone d'injection 140 et qui est mobile de manière à parcourir la totalité de la zone d'injection 140.

Un tel flux d'air chaud 50 concentré peut être fourni, par exemple par un décapeur thermique, l'opérateur mettant en oeuvre l'étape de chauffage local en soufflant l'air chaud 50 issu du décapeur thermique en direction de la zone d'injection 140.

Un tel flux d'air chaud 50 concentré peut également être fourni par un dispositif de soufflage comportant une buse de soufflage mobile. La buse de soufflage d'un tel dispositif est destinée, durant l'étape de chauffage local, à être positionnée en regard de la zone d'injection 140 avec son flux d'air chaud 50 concentré en direction de la zone d'injection. Cette même buse de soufflage est, pendant cette étape de soufflage déplacée le long de la zone d'injection 140 de manière à parcourir toute la zone d'injection, ceci au moyen d'un déplacement circulaire. Un tel déplacement de la buse de soufflage fournit un soufflage d'air chaud tournant.

Selon une autre possibilité de l'invention, le chauffage à distance peut également être fourni par un rayonnement laser ou un rayonnement micro-onde en lieu est place d'un flux d'air chaud 50. Les contraintes de tels moyens de chauffage à distance étant similaires à celles d'un flux d'air chaud 50, ils ne sont donc pas décrits plus précisément dans ce document.

Bien entendu, si la première et la deuxième pièce sont dans l'ensemble des modes de réalisation décrits ci-dessus, une virole intérieure 110 et une virole extérieure 120 d'un redresseur 100, la mise en oeuvre de tels procédés est bien entendu transposable à l'assemblage d'autres pièces de turbomachine dès lors que cet assemblage met en oeuvre une injection d'un élastomère vulcanisable.

## Revendications

1. Procédé d'assemblage d'une première pièce de turbomachine avec au moins une deuxième pièce de turbomachine, comportant les étapes suivantes:
- injection d'un élastomère vulcanisable, du type silicone (145) vulcanisable à température ambiante dit silicone RTV, dans une zone d'injection (140) à la jonction de la première et la deuxième pièce,
- chauffage local de la zone d'injection (140) dans laquelle l'élastomère vulcanisable a été préalablement injecté de manière à vulcaniser l'élastomère vulcanisable.

2. Procédé d'assemblage selon la revendication 1, dans lequel la première et la deuxième pièce sont deux pièces annulaires destinées à former après assemblage un redresseur (100) de turbomachine.

3. Procédé selon la revendication 1 ou 2, dans lequel l'étape de chauffage local est mise en oeuvre au moyen d'un ensemble (20) comportant un support (22) pour la première et la deuxième pièce et un système de chauffage local comprenant une zone de chauffage (27) et qui est associé au support (22) de manière à ce que la zone de chauffage (22) se retrouve en regard de la zone d'injection (140) pendant la mise en oeuvre de l'étape de chauffage.

4. Procédé selon la revendication 3, dans lequel le système de chauffage local comprend, pour fournir la surface de chauffage (27), un moyen de chauffage sélectionné parmi le groupe comportant : un circuit de fluide caloporteur, une résistance chauffante, un système à effet Peltier et un inducteur.

5. Procédé selon la revendication 3 ou 4, dans lequel le système de chauffage local est intégré au support (20), en formant, par exemple, une paroi annulaire de centrage dimensionnée et agencée pour centrer l'assemblage formé par la première et la deuxième pièce.

6. Procédé selon l'une quelconque des revendications 3 à 5, dans lequel l'ensemble (20) fait également office de support d'assemblage mis en oeuvre lors de l'étape d'injection de l'élastomère.

7. Procédé selon la revendication 1 ou 2, dans lequel l'étape de chauffage local est mise en oeuvre au moyen d'un élément chauffant préalablement disposé sur les deux pièces de turbomachine à proximité de la zone d'injection (140).

8. Procédé selon la revendication 1 ou 2, dans lequel l'étape de chauffage local est mise en oeuvre par un système de chauffage à distance, tel qu'un système soufflage d'air chaud (50) au niveau de la zone d'injection (140), un rayonnement laser ou un rayonnement micro-onde.

## Patentansprüche

1. Verfahren zum Zusammenbauen eines ersten Turbotriebwerk-Teils mit mindestens einem zweiten Turbotriebwerk-Teil, das die folgenden Verfahrensschritte umfasst:
- Einspritzen eines vulkanisierbaren Elastomers des Typs bei Raumtemperatur vulkanisierbares Silicon (145), das sogenannte RTV-Silicon, in einen Einspritzbereich (140) an der Verbindung des ersten und des zweiten Teils,
- lokal begrenztes Heizen des Einspritzbereichs (140), in den das vulkanisierbare Elastomer zuvor eingespritzt wurde, so dass das vulkanisierbare Elastomer vulkanisiert wird.

2. Verfahren zum Zusammenbauen nach Anspruch 1, bei dem das erste und das zweite Teil zwei ringförmige Teile sind, die dazu vorgesehen sind, nach dem Zusammenbau einen Leitapparat (100) des Turbotriebwerks zu bilden.

3. Verfahren nach Anspruch 1 oder 2, bei dem der Verfahrensschritt des lokal begrenzten Heizens mittels einer Gesamtanordnung (20) bewerkstelligt wird, die einen Träger (22) für das das erste und das zweite Teil sowie ein System zum lokal begrenzten Heizen umfasst, das eine Heizzone (27) aufweist und das mit dem Träger (22) dergestalt verbunden ist, dass die Heizzone (27) während der Durchführung des Verfahrensschritts des Heizens dem Einspritzbereich (140) zugewandt ist.

4. Verfahren nach Anspruch 3, bei dem das System zum lokal begrenzten Heizen, um die Heizfläche (27) zu schaffen, ein Heizmittel aufweist, das aus folgenden Möglichkeiten gewählt wird: ein Kreislauf mit wärmetransportierendem Fluid, ein Heizwiderstand, ein Peltiereffekt-System und ein Heizinduktor.

5. Verfahren nach Anspruch 3 oder 4, bei dem das System zum lokal begrenzten Heizen in den Träger (20) integriert ist, indem es beispielsweise eine ringförmige Zentrierwand bildet, die dazu dimensioniert und angeordnet ist, die aus dem ersten und dem zweiten Teil gebildete Baugruppe zu zentrieren.

6. Verfahren nach einem der Ansprüche 3 bis 5, bei dem die Gesamtanordnung (20) auch als Baugruppenträger dient, der während des Verfahrensschritts des Einspritzens des Elastomers ausgeführt wird.

7. Verfahren nach Anspruch 1 oder 2, bei dem der Verfahrensschritt des lokal begrenzten Heizens mittels eines Heizelements ausgeführt wird, das zuvor an den beiden Turbotriebwerk-Teilen in der Nähe des Einspritzbereichs (140) angeordnet wird.

8. Verfahren nach Anspruch 1 oder 2, bei dem der Verfahrensschritt des lokal begrenzten Heizens mit einem beabstandeten Heizsystem wie beispielsweise einem Heißluft-Gebläsesystem (50) im Bereich des Einspritzbereichs (140), einer Laserstrahlung oder einer Mikrowellenstrahlung bewerkstelligt wird.

## Claims

1. Method for assembly of a first turbomachine part with at least one second turbomachine part, comprising the following steps:
- injection of a vulcanisable elastomer, of the type silicone (145) that can be vulcanised at ambient temperature called an RTV silicone, in an injection zone (140) at the junction between the first and the second parts,
- local heating of the injection zone (140) in which the vulcanisable elastomer has previously be injected so as to vulcanise the vulcanisable elastomer.

2. Assembly method according to claim 1, in which the first and the second parts are two annular parts that will form a turbomachine guide vane (100) after assembly.

3. Method according to claim 1 or 2, in which the local heating step is implemented using an assembly (20) comprising a support (22) for the first and the second parts and a local heating system comprising a heating zone (27) and that is associated with the support (22) such that the heating zone (22) is facing the injection zone (140) while the heating step is being performed.

4. Method according to claim 3, wherein the local heating system includes, for providing the heating surface (27), a heating means selected from the group comprising a circuit carrying a heating liquid, a heating resistance, a Peltier effect system and an induction coil.

5. Method according to claim 3 or 4, wherein the local heating system is integrated into the support (20), for example by forming an annular centring wall designed and arranged to centre the assembly formed by the first part and the second part.

6. Method according to claim 3 to 5, in which the assembly (20) also acts as an assembly support used during the elastomer injection step.

7. Method according to claim 1 or 2, in which the local heating step is implemented through the use of a heating element previously placed on the two parts of the turbomachine close to the injection zone (140).

8. Method according to claim 1 or 2, in which the local heating step is implemented using a remote heating system such as a hot air blowing system (50) at the injection zone (140), laser radiation or microwave radiation.
